(19) Europäisches Patentamt
European Patent Office
Office européen des brevets

(11) EP 2 935 475 B1

(12) # EUROPÄISCHE PATENTSCHRIFT

(45) Veröffentlichungstag und Bekanntmachung des Hinweises auf die Patenterteilung:
**19.07.2017 Patentblatt 2017/29**

(21) Anmeldenummer: **13811839.3**

(22) Anmeldetag: **11.12.2013**

(51) Int Cl.:
***C09D 5/18*** *(2006.01)* ***C08G 59/40*** *(2006.01)*
***C08K 3/00*** *(2006.01)* ***C08K 5/00*** *(2006.01)*
***C09D 163/00*** *(2006.01)*

(86) Internationale Anmeldenummer:
**PCT/EP2013/076151**

(87) Internationale Veröffentlichungsnummer:
**WO 2014/095502 (26.06.2014 Gazette 2014/26)**

(54) **DÄMMSCHICHTBILDENDE ZUSAMMENSETZUNG UND DEREN VERWENDUNG**

INSULATING LAYER-FORMING COMPOSITION AND USE THEREOF

COMPOSITION FORMANT UNE COUCHE ISOLANTE ET UTILISATION DE LADITE COMPOSITION

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **18.12.2012 DE 102012223515**

(43) Veröffentlichungstag der Anmeldung:
**28.10.2015 Patentblatt 2015/44**

(73) Patentinhaber: **Hilti Aktiengesellschaft
9494 Schaan (LI)**

(72) Erfinder: **LANG, Martin
D-82152 Planegg (DE)**

(56) Entgegenhaltungen:
**WO-A1-02/070622**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 2 935 475 B1

## Beschreibung

Die vorliegende Erfindung betrifft eine dämmschichtbildende Zusammensetzung, insbesondere eine Zusammensetzung mit intumeszierenden Eigenschaften, die ein Bindemittel auf Epoxy-Thiol-Basis enthält, sowie deren Verwendung für den Brandschutz, insbesondere für Beschichtungen von Bauteilen, wie Stützen, Trägern, oder Fachwerkstäben, zur Erhöhung der Feuerwiderstandsdauer.

Dämmschichtbildende Zusammensetzungen, auch intumeszierende Zusammensetzungen genannt, werden üblicherweise zur Bildung von Beschichtungen auf die Oberfläche von Bauteilen aufgebracht, um diese vor Feuer oder gegen große Hitzeeinwirkung etwa in Folge eines Brandes zu schützen. Stahlkonstruktionen sind mittlerweile fester Bestandteil der modernen Architektur, auch wenn sie einen entscheidenden Nachteil im Vergleich zum Stahlbetonbau haben. Oberhalb von ca. 500°C sinkt die Lasttragekapazität des Stahls um 50%, d.h. der Stahl verliert seine Stabilität und seine Tragfähigkeit. Diese Temperatur kann je nach Brandbelastung, etwa bei direkter Feuereinwirkung (ca. 1000°C) bereits nach ca. 5-10 Minuten erreicht werden, was häufig zu einem Tragfähigkeitsverlust der Konstruktion führt. Zielsetzung des Brandschutzes, insbesondere des Stahlbrandschutzes ist es nun, die Zeitspanne bis zum Tragfähigkeitsverlust einer Stahlkonstruktion im Brandfall zur Rettung von Menschenleben und wertvollen Gütern möglichst lange hinauszuzögern.

In den Bauordnungen vieler Länder werden hierzu entsprechende Feuerwiderstandszeiten für bestimmte Bauwerke aus Stahl gefordert. Sie werden durch sogenannte F-Klassen wie F 30, F 60, F 90 (Feuerwiderstandsklassen nach DIN 4102-2) oder amerikanische Klassen nach ASTM usw. definiert. Dabei bedeutet nach DIN 4102-2 zum Beispiel F 30, dass eine tragende Stahlkonstruktion im Brandfall unter Normbedingungen mindestens 30 Minuten dem Feuer standhalten muss. Dies wird üblicherweise dadurch erreicht, dass die Aufheizgeschwindigkeit des Stahls verzögert wird, z. B. durch Überziehen der Stahlkonstruktion mit dämmschichtbildenden Beschichtungen. Hierbei handelt es sich um Anstriche, deren Bestandteile im Brandfall unter Ausbildung eines festen mikroporösen Kohleschaums aufschäumen. Dabei bildet sich eine feinporige und dicke Schaumschicht, die sogenannte Aschekruste, die je nach Zusammensetzung stark wärmeisolierend ist und so das Aufheizen des Bauteils verzögert, sodass die kritische Temperatur von ca. 500°C, frühestens nach 30, 60, 90, 120 Minuten oder bis zu 240 Minuten erreicht wird. Wesentlich für den erreichbaren Feuerwiderstand ist immer die aufgebrachte Schichtdicke der Beschichtung, bzw. der sich daraus entwickelnden Aschekruste. Geschlossene Profile, wie Rohre, benötigen bei vergleichbarer Massivität etwa die doppelte Menge verglichen mit offenen Profilen, wie Träger mit Doppel-T-Profil. Damit die geforderten Feuerwiderstandszeiten eingehalten werden, müssen die Beschichtungen eine bestimmte Dicke aufweisen und die Fähigkeit haben, bei Hitzeeinwirkung eine möglichst voluminöse und damit gut isolierende Aschekruste zu bilden, welche über den Zeitraum der Brandbeanspruchung mechanisch stabil bleibt.

Hierzu existieren im Stand der Technik verschiedene Systeme. Im Wesentlichen wird zwischen 100%-Systemen und lösemittel- bzw. wasserbasierten Systemen unterschieden. Bei den lösemittel- bzw. wasserbasierten Systemen werden Bindemittel, meist Harze, als Lösung, Dispersion oder Emulsion auf das Bauteil aufgetragen. Diese können als Ein- oder Mehrkomponenten-Systeme ausgeführt werden. Nach dem Auftragen verdunstet das Lösungsmittel bzw. das Wasser und hinterlässt einen Film, der mit der Zeit trocknet. Hierbei kann ferner zwischen solchen Systemen unterschieden werden, bei denen sich während der Trocknung die Beschichtung im Wesentlichen nicht mehr ändert, und solchen Systemen, bei denen nach dem Verdunsten das Bindemittel primär durch Oxidations- und Polymerisationsreaktionen härtet, was beispielsweise durch den Luftsauerstoff induziert wird. Die 100%-Systeme enthalten die Bestandteile des Bindemittels ohne Lösungsmittel bzw. Wasser. Sie werden auf das Bauteil aufgetragen, wobei die "Trocknung" der Beschichtung lediglich durch Reaktion der Bindemittelbestandteile untereinander erfolgt.

Die Systeme auf Lösemittel- oder Wasserbasis haben den Nachteil, dass die Trockenzeiten, auch Aushärtezeiten genannt, lang sind und zudem mehrere Schichten aufgetragen werden müssen, also mehrerer Arbeitsgänge bedürfen, um die erforderliche Schichtdicke zu erreichen. Da jede einzelne Schicht vor dem Auftragen der nächsten Schicht entsprechend getrocknet sein muss, führt dies zum einen zu einem hohen Aufwand an Arbeitszeit und dementsprechend hohen Kosten und zu einer Verzögerung bei der Fertigstellung des Bauwerks, da je nach klimatischen Bedingungen zum Teil mehrere Tage vergehen, bis die erforderliche Schichtdicke aufgetragen ist. Nachteilig ist auch, dass durch die erforderliche Schichtdicke die Beschichtung während des Trocknens oder bei Hitzeeinwirkung zur Rissbildung und zum Abblättern neigen kann, wodurch im schlimmsten Fall der Untergrund teilweise freigelegt wird, insbesondere bei Systemen, bei denen das Bindemittel nicht nach Verdunsten des Lösungsmittels bzw. des Wassers nachhärtet.

Um diesen Nachteil zu umgehen, wurden Zwei- oder Mehrkomponentensysteme auf Epoxid-Amin-Basis entwickelt, die nahezu ohne Lösemittel auskommen, so dass eine Aushärtung wesentlich schneller erfolgt und zudem dickere Schichten in einem Arbeitsgang aufgetragen werden können, so dass die erforderliche Schichtdicke wesentlich schneller aufgebaut ist. Diese haben jedoch den Nachteil, dass das Bindemittel eine sehr stabile und starre Polymermatrix mit oftmals hohem Erweichungsbereich bildet, was die Schaumbildung durch die Schaumbildner behindert. Daher müssen dicke Schichten aufgetragen werden, um eine ausreichende Schaumdicke für die Isolierung zu erzeugen. Dies ist

wiederum nachteilig, da viel Material erforderlich ist. Damit diese Systeme aufgetragen werden können, sind häufig Verarbeitungstemperaturen von bis zu +70°C erforderlich, was die Anwendung dieser Systeme arbeitsaufwendig und teuer in der Installation macht. Ferner sind einige der verwendeten Bindemittelkomponenten toxisch oder in sonstiger Weise kritisch (z.B. reizend, ätzend), wie beispielsweise die bei den Epoxid-Amin-Systemen eingesetzten Amine oder Aminmischungen.

Im Bereich der Beschichtungen ist aus der DE 4141858 A1 bekannt, Bisphenol-A-diglycidylether, die mit Dimercaptoverbindungen oder Mercapto-Carbonsäuren und Bisphenol A verlängert sind, als Bindemittel, das mit Aminen gehärtet wird, einzusetzen. Dadurch können Beschichtungen mit einem hohen Füllstoffgehalt formuliert werden. Allerdings werden auch hier häufig kritische Verbindungen eingesetzt. Die WO 2012/082224 A1 beispielsweise beschreibt eine Zusammensetzung, die mindestens eine Epoxidverbindung, mindestens eine Polythiolverbindung als Härtungsmittel und mindestens einen Katalysator umfasst. Die unter anderem dadurch erhaltenen Beschichtungen weisen eine gute Beständigkeit gegen Lösungsmittel und eine harte Oberfläche auf. Eine Brandschutzbeschichtung auf dieser Basis, die Brandschutzadditive enthält, ist allerdings nicht bekannt. Ferner ist nicht bekannt, bis zu welchem Anteil die Brandschutzadditive enthalten sein können und sich die Beschichtung bei Hitzeeinwirkung verhält.

Der Erfindung liegt daher die Aufgabe zugrunde, eine dämmschichtbildende Zusammensetzung für Beschichtungssystem der eingangs erwähnten Art zu schaffen, die die genannten Nachteile vermeidet, die insbesondere nicht lösemittel- oder wasserbasiert ist und eine schnelle Aushärtung aufweist, aufgrund entsprechend abgestimmter Viskosität einfach aufzutragen ist und aufgrund der hohen Intumeszenz, d.h. der Bildung einer effektiven Aschekrustenschicht, nur eine geringe Schichtdicke erfordert.

Diese Aufgabe wird durch die Zusammensetzung nach Anspruch 1 gelöst. Bevorzugte Ausführungsformen sind den Unteransprüchen zu entnehmen.

Gegenstand der Erfindung ist demnach eine dämmschichtbildende Zusammensetzung mit einem Bestandteil A, der mindestens ein Epoxidharz enthält, mit einem Bestandteil B, der mindestens eine Thioverbindung als Härtungsmittel enthält, und mit einem Bestandteil C, der ein dämmschichtbildendes Additiv enthält, wobei die Zusammensetzung ferner ein Phenol-Derivat oder ein tertiäres Amin als Katalysator für die Reaktion zwischen dem Epoxidharz und der Thioverbindung enthält, wodurch die Zusammensetzung bei niedrigen Temperaturen, etwa Raumtemperatur, hinreichend schnell verarbeitbar und aushärtbar wird.

Durch die erfindungsgemäße Zusammensetzung können in einfacher und schneller Weise Beschichtungen mit der für die jeweilige Feuerwiderstandsdauer erforderlichen Schichtdicke aufgetragen werden. Die durch die Erfindung erreichten Vorteile sind im Wesentlichen darin zu sehen, dass die den Systemen auf Lösemittel- oder Wasserbasis inhärenten langsamen Aushärtezeiten deutlich verkürzt werden konnten, was die Arbeitszeit erheblich verringert. Aufgrund der im Applikationsbereich geringen Viskosität der Zusammensetzung, eingestellt über geeignete Verdickersysteme, ist im Unterschied zu Epoxid-Amin-Systemen ein Auftragen ohne Erwärmen der Zusammensetzung zum Beispiel durch das weitverbreitete Airless-Sprühverfahren möglich.

Ein weiterer Vorteil liegt darin, dass auf gesundheitsgefährdende und kennzeichnungspflichtige Verbindungen, wie beispielsweise kritische Aminverbindungen, weitgehend verzichtet werden kann.

Aufgrund des gegenüber den Systemen auf Epoxid-Amin-Basis niedrigeren Erweichungsbereiches der Polymermatrix ist die Intumeszenz hinsichtlich der Expansionsrate relativ hoch, so dass selbst mit dünnen Schichten eine große isolierende Wirkung erreicht wird. Hierzu trägt auch der mögliche hohe Füllgrad der Zusammensetzung mit Brandschutzadditiven bei, der unter anderem auch dadurch erreicht werden kann, dass die Zusammensetzung als Zwei- oder Mehrkomponenten-System konfektioniert werden kann. Dementsprechend sinkt der Materialaufwand, was sich insbesondere beim großflächigen Auftragen günstig auf die Materialkosten auswirkt. Erreicht wird dies insbesondere durch die Nutzung eines reaktiven Systems, das nicht physikalisch trocknet und damit keinen Volumenverlust durch das Abtrocknen von Lösemitteln oder bei wasserbasierten Systemen von Wasser erleidet, sondern nukleophil härtet. So ist bei einem klassischen System ein Lösemittelgehalt von etwa 25% typisch. Dies bedeutet, dass aus einer 10 mm-Schicht nur 7,5 mm als eigentliche Schutzschicht auf dem zu schützenden Substrat verbleiben. Bei der erfindungsgemäßen Zusammensetzung verbleiben mehr als 96 % der Beschichtung auf dem zu schützenden Substrat. Ferner ist die relative Aschekrustenstabilität aufgrund der vorteilhaften Struktur des im Brandfall gebildeten Schaums sehr hoch.

Verglichen mit lösemittel- oder wasserbasierten Systemen, wenn sie ohne Grundierung aufgetragen werden, zeigen die erfindungsgemäßen Zusammensetzungen eine ausgezeichnete Haftung an unterschiedlichen metallischen und nicht metallischen Substraten, sowie eine ausgezeichnete Kohäsion und Schlagbeständigkeit.

Zum besseren Verständnis der Erfindung werden die folgenden Erläuterungen der hierin verwendeten Terminologie als sinnvoll erachtet. Im Sinne der Erfindung:

- bedeutet "*multifunktionell*", dass die entsprechende Verbindung mehr als eine funktionelle Gruppe pro Molekül aufweist; dementsprechend bedeutet multifunktionell im Zusammenhang mit Epoxidverbindungen, dass diese mehr als eine Epoxidgruppen pro Molekül aufweisen, und in Bezug auf Thiol-funktionalisierte Verbindungen, dass diese wenigstens zwei Thiolgruppen pro Molekül aufweisen; die Gesamtzahl der jeweiligen funktionellen Gruppen ist die

Funktionalität der entsprechenden Verbindung;

- bedeutet *"Gerüst"* des Epoxidharzes oder der Thiol-funktionalisierten Verbindung der jeweils andere Teil des Moleküls, an das die funktionelle Epoxid- oder Thiolgruppe angebunden sein kann;

- bedeutet *"chemische Intumeszenz"* die Bildung einer voluminösen, isolierenden Ascheschicht durch aufeinander abgestimmte Verbindungen, die bei Hitzeeinwirkung miteinander reagieren;

- bedeutet *"physikalische Intumeszenz"* die Bildung einer voluminösen, isolierenden Schicht durch Aufblähen einer Verbindung, die, ohne dass eine chemische Reaktion zwischen zwei Verbindungen stattgefunden hat, bei Hitzeeinwirkung Gase freisetzt, wodurch das Volumen der Verbindung um ein Vielfaches des ursprünglichen Volumens zunimmt;

- bedeutet *"dämmschichtbildend',* dass im Brandfall ein fester mikroporöser Kohleschaums entsteht, so dass die gebildete feinporige und dicke Schaumschicht, die sogenannte Aschekruste, je nach Zusammensetzung ein Substrat gegen Hitze isoliert;

- ist ein *"Kohlenstofflieferant"* eine organische Verbindung, die durch unvollständige Verbrennung ein Kohlenstoffgerüst hinterlässt und nicht vollständig zu Kohlendioxid und Wasser verbrennt (Carbonifizierung); diese Verbindungen werden auch als *"Kohlenstoffgerüstbildner"* bezeichnet;

- ist *ein "Säurebildner"* eine Verbindung, die sich unter Hitzeeinwirkung, d.h. oberhalb etwa 150°C beispielsweise durch Zersetzung eine nicht flüchtige Säure bildet und dadurch als Katalysator für die Carbonifizierung wirkt; zudem kann sie zur Erniedrigung der Viskosität der Schmelze des Bindemittels beitragen; hiermit gleichbedeutend wird der Begriff *"Dehydrierungskatalysator"* verwendet;

- ist ein *"Treibmittel"* eine Verbindung, die sich bei erhöhter Temperatur unter Entwicklung inerter, d.h. nicht-brennbarer Gase zersetzt und das durch die Carbonifizierung gebildet Kohlenstoffgerüst und gegebenenfalls das Erweichte Bindemittel zu einem Schaum aufbläht (Intumeszenz); dieser Begriff wird gleichbedeutend mit *"Gasbildner"* verwendet;

- ist ein *"Aschekrustenstabilisator"* eine sogenannte gerüstbildende Verbindung, die das Kohlenstoffgerüst (Aschekruste), das aus dem Zusammenwirken der Kohlenstoffbildung aus der Kohlenstoffquelle und dem Gas aus dem Treibmittel, oder der physikalischen Intumeszenz gebildet wird, stabilisiert. Die prinzipielle Wirkungsweise ist dabei die, dass die an sich sehr weichen entstehenden Kohlenstoffschichten durch anorganische Verbindungen mechanisch verfestigt werden. Die Zugabe eines solchen Aschekrustenstabilisators trägt zu einer wesentlichen Stabilisierung der Intumeszenzkruste im Brandfall bei, da diese Additive die mechanische Festigkeit der intumeszierenden Schicht erhöhen und/oder deren Abtropfen verhindern, wodurch die isolierende Wirkung des Schaums aufrechterhalten oder verstärkt wird.

- ist ein *"Oligomer"* ein Molekül mit 2 bis 5 Wiederholungseinheiten und ist ein *"Polymer"* ein Molekül mit 6 oder mehr Wiederholungseinheiten und können Strukturen aufweisen, die linear, verzweigt, sternförmig, gewunden, hyperverzweigt oder vernetzt sind; Polymere können eine einzelne Art von Wiederholungseinheit aufweisen ("Homopolymere") oder sie können mehr als eine Art von Wiederholungseinheiten aufweisen ("Copolymere"). Wie hierin verwendet, ist "Harz" ein Synonym für Polymer.

- Bedeutet *"Epoxidäquivalentmasse"* diejenige Menge an Epoxidharz in [g], die ein Äquivalent [Val] Epoxidfunktionen besitzt und berechnet sich aus der Molmasse *M* in [g/Mol] dividiert durch die Funktionalität *f* in [Val/Mol]; (EEW [g/Val]).

Im Allgemeinen wird angenommen, dass das Umsetzen eines Epoxidharzes mit einer Funktionalität von zwei mit einer Thioverbindung, insbesondere Thiol-funktionalisierten Verbindung mit einer Funktionalität von zwei zu linearen molekularen Strukturen führen wird. Oftmals müssen molekulare Strukturen erzeugt werden, die verzweigt und/oder vernetzt sind, wofür wahrscheinlich die Verwendung von mindestens einem Inhaltsstoff mit einer Funktionalität von größer zwei erforderlich ist. Daher ist das Epoxidharz und/oder die Thioverbindung, insbesondere Thiol-funktionalisierte Verbindung bevorzugt multifunktionell, wobei das multifunktionelle Epoxidharz oder die multifunktionelle Thioverbindung, insbesondere multifunktionelle Thiol-funktionalisierte Verbindung oder beide stärker bevorzugt eine Funktionalität von größer zwei (> 2) haben.

Als Epoxidharz sind in der Epoxychemie übliche Epoxidharze geeignet. Diese werden auf bekannte Art und

Weise erhalten, zum Beispiel aus der Oxidation der entsprechenden Olefine oder aus der Reaktion von Epichlorhydrin mit den entsprechenden Polyolen, Polyphenolen oder Aminen. Grundlegende Informationen zu und Beispiele für Epoxidharze sind dem Kapitel "Epoxy Resins" der Encyclopedia of Polymer Sciences and Technology, Vol. 9, Wiley-Interscience, 2004, zu entnehmen. Als geeignete Epoxidharze seien beispielhaft erwähnt Reaktionsprodukte von Polyhydroxyverbindungen, insbesondere mehrwertige Phenole oder Phenol-Aldehyd-Kondensate, mit Epihalogenhydrinen oder deren Vorläufern, insbesondere:

a) Reaktionsprodukte von Epichlorhydrin mit Bisphenol A;
b) Reaktionsprodukte von Epichlorhydrin mit Bisphenol S
c) Epoxy-Novolake auf Phenol- oder Cresolbasis;
d) Aromatische Glycidylaminharze;
e) Epoxidharze ohne aromatische Struktureinheiten;

sowie Gemische zweier oder mehrerer derartiger Epoxidharze in beliebigem Verhältnis und in beliebigen Reinheitsgraden.

Als Epoxidharz besonders geeignet sind sogenannte Polyepoxid-Flüssigharze, im Folgenden als "Flüssigharz" bezeichnet. Diese weisen eine Glasübergangstemperatur auf, welche üblicherweise unterhalb von 25°C liegt, im Unterschied zu den sogenannten Festharzen, welche eine Glasübergangstemperatur oberhalb von 25°C aufweisen und sich zu bei 25°C schüttfähigen Pulvern zerkleinern lassen. Geeignete Verbindungen sind die Glycidylisierungsprodukte von:

- Dihydroxybenzol-Derivaten wie Resorcin, Hydrochinon und Brenzkatechin;
- weiteren Bisphenolen oder Polyphenolen wie Bis-(4-hydroxy-3-methylphenyl)-methan, 2,2-Bis-(4-hydroxy-3-methylphenyl)-propan (Bisphenol-C), Bis-(3,5-dimethyl-4-hydroxyphenyl)-methan, 2,2-Bis-(3,5-dimethyl-4-hydroxyphenyl)-propan, 2,2-Bis-(3,5-dibromo-4-hydroxyphenyl)-propan, 2,2-Bis-(4-hydroxy-3-tert.-butylphenyl)-propan, 2,2-Bis-(4-hydroxyphenyl)-butan (Bisphenol-B), 3,3-Bis-(4-hydroxyphenyl)-pentan, 3,4-Bis-(4-hydroxyphenyl)-hexan, 4,4-Bis-(4-hydroxyphenyl)-heptan, 2,4-Bis-(4-hydroxyphenyl)-2-methylbutan, 2,4-Bis-(3,5-dimethyl-4-hydroxyphenyl)-2-methylbutan, 1,1-Bis-(4-hydroxyphenyl)-cyclohexan (Bisphenol-Z), 1,1-Bis-(4-hydroxyphenyl)-3,3,5-trimethylcyclohexan (Bisphenol-TMC), 1,1-Bis-(4-hydroxyphenyl)-1-phenyl-ethan, 1,4-Bis[2-(4-hydroxyphenyl)-2-propyl]-benzol) (Bisphenol-P), 1,3-Bis-[2-(4-hydroxyphenyl)-2-propyl]-benzol) (Bisphenol-M), 4,4'-Dihydroxydiphenyl (DOD), 4,4'-Dihydroxybenzophenon, Bis-(2-hydroxynaphth-1-yl)-methan, Bis-(4-hydroxynaphth-1-yl)-methan 1,5-Dihydroxynaphthalin, Tris-(4-hydroxyphenyl)-methan, 1,1,2,2-Tetrakis-(4-hydroxyphenyl)-ethan Bis-(4-hydroxyphenyl)-ether, Bis-(4-hydroxyphenyl)sulfon;
- Kondensationsprodukten von Phenolen mit Formaldehyd, die unter sauren Bedingungen erhalten werden, wie Phenol-Novolaken oder Kresol-Novolaken, auch Bisphenol-F-Novolake genannt;
- aromatischen Aminen, wie Anilin, Toluidin, 4-Aminophenol, 4,4'-Methylendiphenyldiamin (MDA), 4,4'-Methylendiphenyldi-(N-methyl)-amin, 4,4'-[1,4-Phenylen-bis-(1-methyl-ethyliden)]-bisanilin (Bisanilin-P), 4,4'-[1,3-Phenylen-bis-(1-methyl-ethyliden)]-bisanilin (Bisanilin-M);
- sowie Gemische zweier oder mehrerer derartiger Epoxidharze in beliebigem Verhältnis und in beliebigen Reinheitsgraden.

Weiter bevorzugt im Sinne der Erfindung sind Reaktionsprodukte von Epichlorhydrin mit Bisphenol A mit einem Epoxidäquivalentmasse (EEW) $\leq$ 550 g/Val; Reaktionsprodukte von Epichlorhydrin mit Bisphenol F, dem einfachsten Vertreter der Novolake, mit einem EEW $\leq$ 500 g/Val; beliebige Gemische dieser beiden Reaktionsprodukte, Reaktionsprodukte eines beliebigen Gemisches von Bisphenol A und Bisphenol F mit Epichlorhydrin, Epoxidharze wie Hydantoin-basierte Epoxidharze oder Diglycidylether von hydriertem Bisphenol A oder Bisphenol F; sowie Gemische zweier oder mehrerer derartiger Epoxidharze in beliebigem Verhältnis und in beliebigen Reinheitsgraden.

Besonders bevorzugt sind Reaktionsprodukte von Epichlorhydrin mit Bisphenol Amit einem EEW $\leq$ 330 g/Val; Reaktionsprodukte von Epichlorhydrin mit Bisphenol F, dem einfachsten Vertreter der Novolake, mit einem EEW $\leq$ 300 g/Val; beliebige Gemische dieser beiden Reaktionsprodukte, Reaktionsprodukte eines beliebigen Gemisches von Bisphenol A und Bisphenol F mit Epichlorhydrin mit einem EEW $\leq$ 330 g/Val; 5,5-Dimethyl-1,3-bis(2,3-epoxypropyl)-2,4-imidazolidindion; 2,2-Bis[4-(2,3-epoxypropoxy)-cyclohexyl]propan; sowie Gemische zweier oder mehrerer derartiger Epoxidharze in beliebigem Verhältnis und in beliebigen Reinheitsgraden.

Ganz besonders bevorzugt sind Reaktionsprodukte von Epichlorhydrin mit Bisphenol A mit einem EEW $\leq$ 200 g/Val, wie beispielsweise Epilox® A 17-01, Epilox® A 18-00, Epilox® A 19-00, Epilox® A 19-02, Epilox® A 19-03 oder Epilox® A 19-04 der Leuna-Harze GmbH, dargestellt durch die nachfolgende Formel, worin $0 \leq n \leq 0{,}2$;

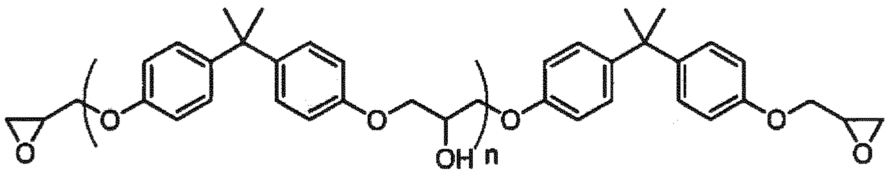

Reaktionsprodukte von Epichlorhydrin mit Bisphenol F, dem einfachsten Vertreter der Novolake, mit einem EEW ≤ 185 g/Val, wie beispielsweise Epilox® F 16-01 oder Epilox® F 17-00 der Leuna-Harze GmbH, dargestellt durch die nachfolgende Formel, worin $0 \leq n \leq 0{,}2$;

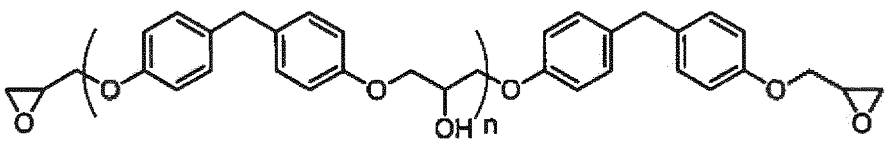

sowie Gemische zweier oder mehrerer derartiger Epoxidharze in beliebigem Verhältnis und in beliebigen Reinheitsgraden, wie beispielsweise Epilox® AF 18-30, Epilox® 18-50 oder Epilox® T 19-27 der Leuna-Harze GmbH, sowie Reaktionsprodukte eines beliebigen Gemisches von Bisphenol A und Bisphenol F mit Epichlorhydrin mit einem EEW ≤ 200 g/Val.

Als Epoxidharz eignet sich auch ein aliphatisches oder cycloaliphatisches Polyepoxid, wie beispielsweise:

- ein Glycidylether eines gesättigten oder ungesättigten, verzweigten oder unverzweigten, zyklischen oder offenkettigen $C_2$- bis $C_{30}$-Diols, wie beispielsweise Ethylenglykol, Propylenglykol, Butylenglykol, Hexandiol, Octandiol, ein Polypropylenglykol, Dimethylolcyclohexan, Neopentylglykol oder Dibromoneopentylglykol;
- ein Glycidylether eines tri- oder tetrafunktionellen, gesättigten oder ungesättigten, verzweigten oder unverzweigten, zyklischen oder offenkettigen Polyols wie Rizinusöl, Trimethylolpropan, Trimethylolethan, Pentaerythritol, Sorbit oder Glycerin, sowie alkoxyliertes Glycerin oder alkoxyliertes Trimethylolpropan;
- ein hydriertes Bisphenol-A-, -F- oder -A/F-Flüssigharz, beziehungsweise die Glycidylisierungsprodukte von hydriertem Bisphenol-A, -F oder -A/F:
- ein N-Glycidylderivat von Amiden oder heterocyclischen Stickstoffbasen, wie Triglycidylcyanurat und Triglycidylisocyanurat, sowie Umsetzungsprodukte von Epichlorhydrin und Hydantoin.

Als Epoxidharz möglich sind auch ein Bisphenol A-, F- oder A/F-Festharz, welches ähnlich aufgebaut ist wie die bereits genannten Flüssigharze der obigen beiden Formeln, aber anstelle des Index n einen Wert von 2 bis 12 aufweist, und eine Glasübergangstemperatur oberhalb von 25°C aufweist.

Als Epoxidharz eignen sich schließlich auch Epoxidharze aus der Oxidation von Olefinen, beispielsweise aus der Oxidation von Vinylcylohexen, Dicyclopentadien, Cyclohexadien, Cyclododecadien, Cyclododecatrien, Isopren, 1,5-Hexadien, Butadien, Polybutadien oder Divinylbenzol.

Je nach Funktionalität des Epoxidharzes können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

Durch Zugabe mindestens eines Reaktiwerdünners kann die Viskosität der Zusammensetzung entsprechend den Applikationseigenschaften eingestellt bzw. angepasst werden.

In einer Ausführungsform der Erfindung enthält die Zusammensetzung daher weitere epoxidgruppenhaltige Verbindungen als Reaktiwerdünner, falls erforderlich. Diese Verbindungen enthalten eine oder mehrere Epoxidgruppen. Grundsätzlich kann jede niedrigviskose Verbindung, die mindestens eine Epoxidgruppe pro Molekül trägt, verwendet werden. Es können zwei oder mehrere unterschiedliche Reaktiwerdünner kombiniert werden. Geeignete Beispiele sind Allylglycidylether, Butylglycidylether (BGE), 2-Ethylhexylglycidylether, Alkylglycidylether ($C_{12}$-$C_{14}$), Tridecylglycidylether, Phenylglycidylether (PGE), *o*-Kresolglycidylether (CGE), *p-tert*-Butylglycidylether, Resorcindiglycidylether (RDGE), 1,4-Butandioldiglycidylether (BDGE), 1,6-Hexandioldiglycidylether (HDGE), Cyclohexandimethanoldiglycidylether, Neopentylglycoldiglycidylether, Trimethylolpropantriglycidylether, Glycerintriglycidylether, Polypropylenglycoldiglycidylether sowie epoxidierte Pflanzenöle wie beispielsweise epoxidiertes Leinöl und epoxidiertes Rizinusöl.

Zweckmäßig kann als Härtungsmittel jede Thioverbindung verwendet werden, die mit Epoxidverbindungen reagieren kann. Bevorzugt handelt es sich dabei um Thiol-funktionalisierte Verbindungen, wobei die Thiot-Gruppe (-SH) die funktionelle Gruppe bildet.

Zweckmäßig kann als Thiol-funktionalisierte Verbindung jede Verbindung verwendet werden, welche über

mindestens zwei Thiolgruppen verfügt. Jede Thiolgruppe ist dabei entweder direkt oder über einen Linker an ein Gerüst angebunden.

Die Thiol-funktionalisierte Verbindung der vorliegenden Erfindung kann über irgendeines einer breiten Vielzahl von Gerüsten verfügen, wobei diese gleich oder unterschiedlich sein können.

Erfindungsgemäß ist das Gerüst ein Monomer, ein Oligomer oder ein Polymer.

In einigen Ausführungsformen der vorliegenden Erfindung umfassen die Gerüste Monomere, Oligomere oder Polymere mit einem Molekulargewicht (Mw) von 50.000 g/mol oder weniger, bevorzugt 25.000 g/mol oder weniger, stärker bevorzugt 10.000 g/mol oder weniger, noch stärker bevorzugt 5.000 g/mol oder weniger, noch stärker bevorzugt 2.000 g/mol oder weniger, und am stärksten bevorzugt 1.000 g/mol oder weniger.

Als Monomere, die die als Gerüste geeignet sind, können beispielhaft Alkandiole, Alkylenglykole, Zucker, mehrwertige Derivate davon oder Gemische davon und Amine, wie Ethylendiamin und Hexamethylendiamin, und Thiole erwähnt werden. Als Oligomere oder Polymere, die als Gerüste geeignet sind, können folgende beispielhaft erwähnt werden: Polyalkylenoxid, Polyurethan, Polyethylenvinylacetat, Polyvinylalkohol, Polydien, hydriertes Polydien, Alkyd, Alkydpolyester, (Meth)acrylpolymer, Polyolefin, Polyester, halogeniertes Polyolefin, halogenierter Polyester, Polymercaptan, sowie Copolymere oder Gemische davon.

In bevorzugten Ausführungsformen der Erfindung ist das Gerüst ein mehrwertiger Alkohol oder ein mehrwertiges Amin, wobei diese monomer, oligomer oder polymer sein können. Stärker bevorzugt ist das Gerüst ein mehrwertiger Alkohol.

Als mehrwertige Alkohole, die als Gerüste geeignet sind, können dabei folgende beispielhaft erwähnt werden: Alkandiole, wie Butandiol, Pentandiol, Hexandiol, Alkylenglykole, wie Ethylenglykol, Propylenglykol und Polypropylenglykol, Glycerin, 2-(Hydroxymethyl)propan-1,3-diol,1,1,1-Tris(hydroxymethyl)ethan, 1,1,1-Trimethylolpropan, Di(trimethylolpropan), Tricyclodecandimethylol, 2,2,4-Trimethyl-1,3-pentandiol, Bisphenol A, Cyclohexandimethanol, alkoxylierte und/oder ethoxylierte und/oder propoxylierte Derivate von Neopentylglykol, Tertraethylenglykolcyclohexandimethanol, Hexandiol, 2-(Hydroxymethyl)propan-1,3-diol, 1,1,1-Tris(hydroxymethyl)ethan, 1,1,1-Trimethylolpropan und Rizinusöl, Pentaerythritol, Zucker, mehrwertige Derivate davon oder Gemische davon.

Als Linker können beliebige Einheiten, welche geeignet sind, Gerüst und funktionelle Gruppe zu verbinden, verwendet werden. Für Thiol-funktionalisierte Verbindungen ist der Linker bevorzugt ausgewählt unter den Strukturen (I) bis (XI).

1: Bindung zur funktionellen Gruppe
2: Bindung zum Gerüst

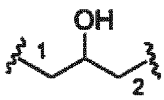
(I)

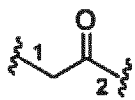
(II)

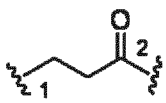
(III)

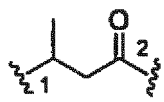
(IV)

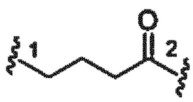
(V)

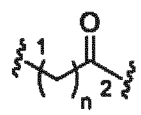
4 <= n <= 10
(VI)

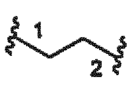
(VII)

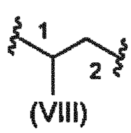
(VIII)

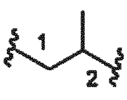
(IX)

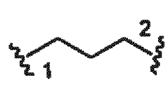
(X)

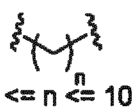
4 <= n <= 10
(XI)

Als Linker für Thiol-funktionalisierte Verbindungen besonders bevorzugt sind die Strukturen (I), (II), (III) und (IV).

Besonders bevorzugte Thiol-funktionalisierte Verbindungen sind Ester der $\alpha$-Thioessigsäure (2-Mercaptoacetate), $\beta$-Thiopropionsäure (3-Mercaptopropionate) und 3-Thiobuttersäure (3-Mercaptobutyrate) mit Monoalkoholen, Diolen, Triolen, Tetraolen, Pentaolen oder anderen Polyolen sowie 2-Hydroxy-3-mercaptopropylderivate von Monoalkoholen, Diolen, Triolen, Tetraolen, Pentaolen oder anderen Polyolen. Auch Gemische von Alkoholen können hierbei als Basis für die Thiol-funktionalisierte Verbindung verwendet werden. In dieser Hinsicht wird Bezug genommen auf die WO 99/51663 A1, deren Inhalt hiermit in diese Anmeldung aufgenommen wird.

Als besonders geeignete Thiol-funktionalisierte Verbindungen können beispielhaft erwähnt werden: Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethyfolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1-Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

Die Thiol-funktionalisierte Verbindung kann alleine oder als Gemisch von zwei oder mehreren, unterschiedlichen Thiol-funktionalisierten Verbindungen eingesetzt werden.

Je nach Funktionalität der Thiol-funktionalisierten Verbindung können der Vernetzungsgrad des Bindemittels und somit zum einen die Festigkeit der entstehenden Beschichtung, als auch deren elastische Eigenschaften eingestellt werden. Gleichzeitig hat dieses einen direkten Einfluss auf die erzielbare Expansion der entstehenden Aschekruste im Brandfall.

In der Zusammensetzung der vorliegenden Erfindung kann der relative Anteil an Epoxidharzen zu Thiol-funktionalisierten Verbindungen durch das reaktive Äquivalentverhältnis, welches das Verhältnis der Anzahl aller Epoxidgruppen in der Zusammensetzung zu der Anzahl an Thiolgruppen in der Zusammensetzung ist, charakterisiert werden. Das reaktive Äquivalentverhältnis beträgt 0,1 bis 10:1, bevorzugt 0,2 bis 5:1, stärker bevorzugt 0,3 bis 3:1, noch stärker bevorzugt 0,5 bis 2:1 und noch stärker bevorzugt 0,75 bis 1,25:1.

Als zusätzliche Härterkomponente, auch als Co-Härtungsmittel bezeichnet, kann optional ein für Epoxidharze üblicher Aminhärter verwendet werden. Geeignete Beispiele können dem Kapitel "Epoxy Resins" der Encyclopedia of Polymer Sciences and Technology, Vol. 9, Wiley-Interscience, 2004, entnommen werden. Insbesondere haben sich aliphatische oder aromatische Amine, Amidoamine, Polyamide, Polyamin-Epoxidharzaddukte und/oder Ketimine bewährt. Die Aminhärter können einzeln oder als Gemisch zweier oder mehrerer Verbindungen eingesetzt werden. Beispiele sind Ethylendiamin, Propylendiamin, Hexamethylendiamin, Diethylentriamin (DETA), Tetraethylentetramin (TETA), Isophorondiamin (IPDA), *m*-Xylylendiamin (mXDA), *N*-Methylbenzylamin (NMB) oder die Ancamide® (Air Products), Diethylaminopropylamin (DEAPA), *N*-Aminoethylpiperazin (N-AEP), Diaminodiphenylsulfon (DDS), 1,8-Diamino-*p*-menthan (MDA). Ebenso können Polyetheramine wie Jeffamine® D-230 (Huntsman), Jeffamine® D-400 (Huntsman), Jeffamine® T-403 (Huntsman) verwendet werden.

Über ein entsprechend gewähltes Gemisch aus Thioverbindung, insbesondere Thiolfunktionalisierter Verbindung und Aminen als Härter für das Epoxidharz können die Beschichtungseigenschaften eingestellt werden.

Es wird ein Phenol-Derivat oder ein tertiäres Amin als Katalysator für die Härtung, d.h. die Reaktion des Epoxidharzes mit der Thioverbindung, insbesondere Thiol-funktionalisierten Verbindung verwendet. Durch die Verwendung eines solchen Katalysators werden Zusammensetzungen erhalten, die schnell, d.h. innerhalb von wenigen Minuten, und vollständig auch bei Raumtemperatur aushärten, was solche Zusammensetzungen sehr attraktiv für die Anwendung vor Ort, etwa auf der Baustelle macht.

Als Katalysatoren können die für Reaktionen zwischen Epoxidharzen und Thiol-funktionalisierten Verbindungen verwendeten Verbindungen, wie tertiäre Amine, z.B. Benzyldimethylamin, N,N-Dimethylpropylamin, 1,8-Diazabicyclo[5.4.0]undec-7-en und Bis-N,N-Dimethylethanolaminether, Phenol-Derivate, z.B. Nonylphenol, und dergleichen, die dem Fachmann bekannt sind, verwendet werden. In dieser Hinsicht wird Bezug genommen auf die WO 2012/08224 A1. In einer bevorzugten Ausführungsform der Erfindung enthält der Bestandteil B ferner ein Aminophenol oder einen Ether davon, der mindestens eine tertiäre Aminogruppe gegebenenfalls zusammen mit einer primären und/oder sekundären Aminogruppe aufweist, als Katalysator. Der Katalysator ist bevorzugt unter Verbindungen der allgemeinen Formel (XX) ausgewählt,

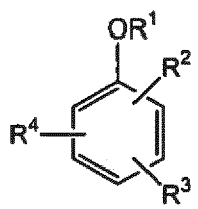

(XX)

in der $R^1$ Wasserstoff oder ein linearer oder verzweigter $C_1$-$C_{15}$-Alkylrest ist, $R^2$ $(CH_2)_nNR^5R^6$- oder $NH(CH_2)_nNR^5R^6$-ist, in denen $R^5$ und $R^6$ unabhängig voneinander ein linearer oder verzweigter $C_1$-$C_{15}$-Alkylrest sind und n = 0 oder 1 ist, $R^3$ und $R^4$ unabhängig voneinander Wasserstoff, $(CH_2)_nNR^7R^8$ oder $NH(CH_2)_nNR^7R^8$ sind, $R^7$ und $R^8$ unabhängig voneinander Wasserstoff oder ein linearer oder verzweigter $C_1$-$C_{15}$-Alkylrest sind und n = 0 oder 1 ist.

$R^1$ ist bevorzugt Wasserstoff oder ein $C_1$-$C_{15}$-Alkylrest, insbesondere ein linearer $C_1$-$C_{15}$-Alkylrest, stärker bevorzugt Methyl oder Ethyl und am stärksten bevorzugt Methyl.

Bevorzugt ist das Phenol der Formel (XX) in 2-, 4- und 6-Position substituiert, d.h. die Substituenten $R^2$, $R^3$ und $R^4$ sitzen in 2-, 4- und 6-Position.

Für den Fall, dass $R^5$, $R^6$, $R^7$ und $R^8$ Alkylreste sind, sind diese bevorzugt ein $C_1$-$C_5$-Alkylrest, stärker bevorzugt Methyl oder Ethyl und am stärksten bevorzugt Methyl.

Als Katalysator kann entweder eine Verbindung oder ein Gemisch von mindestens zwei Verbindungen der Formel (XX) eingesetzt werden.

Bevorzugt ist der Katalysator unter 2,4,6-Tris(dimethylaminomethyl)phenol, Bis(dimethylaminomethyl)phenol und 2,4,6-Tris(dimethylamino)phenol ausgewählt. Am stärksten bevorzugt ist der Katalysator 2,4,6-Tris(dimethylaminomethyl)phenol.

Ein bevorzugtes Katalysatorgemisch enthält 2,4,6-Tris(dimethlaminomethyl)phenol und Bis(dimethylaminomethyl)phenol. Solche Gemische sind z.B. kommerziell erhältlich als Ancamine® K-54 (AirProducts, Belgien).

Erfindungsgemäß enthält der Bestandteil C ein dämmschichtbildendes Additiv, wobei das Additiv sowohl einzelne Verbindungen als auch ein Gemisch von mehreren Verbindungen umfassen kann.

Zweckmäßig werden als dämmschichtbildende Additive solche eingesetzt, die durch die Bildung einer sich unter Hitzeeinwirkung bildenden, aufgeblähten, isolierenden Schicht aus schwerentflammbaren Material, die das Substrat vor Überhitzung schützt und dadurch die Veränderung der mechanischen und statischen Eigenschaften tragender Bauteile durch Hitzeeinwirkung verhindert oder zumindest verzögert, wirken. Die Bildung einer voluminösen, isolierenden Schicht, nämlich einer Ascheschicht, kann durch die chemische Reaktion eines Gemisches aus entsprechenden aufeinander abgestimmten Verbindungen, die bei Hitzeeinwirkung miteinander reagieren, gebildet werden. Solche Systeme sind dem Fachmann unter dem Begriff chemische Intumeszenz bekannt und können erfindungsgemäß eingesetzt werden. Alternativ kann die voluminöse, isolierende Schicht durch Aufblähen einer einzelnen Verbindung, die, ohne dass eine chemische Reaktion zwischen zwei Verbindungen stattgefunden hat, bei Hitzeeinwirkung Gase freisetzen gebildet werden. Solche Systeme sind dem Fachmann unter dem Begriff physikalische Intumeszenz bekannt und können ebenfalls erfindungsgemäß eingesetzt werden. Beide Systeme können jeweils alleine oder zusammen als Kombination erfindungsgemäß eingesetzt werden.

Für die Ausbildung einer intumeszierenden Schicht durch chemische Intumeszenz sind allgemein wenigstens drei Komponenten erforderlich, ein Kohlenstofflieferant, ein Dehydrierungskatalysator und ein Treibmittel, die beispielsweise bei Beschichtungen in einem Bindemittel enthalten sind. Bei Hitzeeinwirkung erweicht das Bindemittel und die Brandschutzadditive werden freigesetzt, so dass diese im Falle der chemischen Intumeszenz miteinander reagieren oder im Falle der physikalischen Intumeszenz sich aufblähen können. Durch thermische Zersetzung wird aus dem Dehydrierungskatalysator die Säure gebildet, die als Katalysator für die Carbonifizierung des Kohlenstofflieferanten dient. Gleichzeitig zersetzt sich das Treibmittel thermisch unter Bildung inerter Gase, die ein Aufblähen des karbonisierten (verkohlten) Materials und gegebenenfalls das erweichte Bindemittel unter Bildung eines voluminösen, isolierenden Schaums bewirkt.

In einer Ausführungsform der Erfindung, in der die isolierende Schicht durch chemische Intumeszenz gebildet wird, umfasst das dämmschichtbildertde Additiv mindestens einen Kohlenstoffgerüstbildner sofern das Bindemittel nicht als solcher verwendet werden kann, mindestens einen Säurebildner, mindestens ein Treibmittel, und mindestens einen anorganischen Gerüstbildner. Die Komponenten des Additivs werden insbesondere so ausgewählt, dass sie einen Synergismus entwickeln können, wobei einige der Verbindungen mehrere Funktionen erfüllen können.

Als Kohlenstofflieferant kommen die in intumeszierenden Brandschutzformulierungen üblicherweise verwendeten und dem Fachmann bekannten Verbindungen in Betracht, wie stärkeähnliche Verbindungen, z.B. Stärke und modifizierte Stärke, und/oder mehrwertige Alkohole (Polyole), wie Saccharide und Polysaccharide und/oder ein thermoplastisches oder duroplastisches polymeres Harzbindemittel, wie ein Phenolharz, ein Harnstoffharz, ein Polyurethan, Polyvinylchlorid, Poly(meth)acrylat, Polyvinylacetat, Polyvinylalkohol, ein Silikonharz und/oder einen Kautschuk. Geeignete Polyole sind Polyole aus der Gruppe Zucker, Pentaerythrit, Dipentaerythrit, Tripentaerythrit, Polyvinylacetat, Polyvinylalkohol, Sorbitol, Polyoxyethylen-/Polyoxypropylen-(EO-PO-)Polyole. Bevorzugt werden Pentaerythrit, Dipentaerythrit oder Polyvinylacetat eingesetzt.

Es sei erwähnt, dass das Bindemittel im Brandfall selbst auch die Funktion eines Kohlenstofflieferanten haben kann.

Als Dehydrierungskatalysatoren bzw. Säurebildner kommen die in intumeszierenden Brandschutzformulierungen üblicherweise verwendeten und dem Fachmann bekannten Verbindungen in Betracht, wie ein Salz oder ein Ester einer anorganischen, nicht flüchtigen Säure, ausgewählt unter Schwefelsäure, Phosphorsäure oder Borsäure. Im wesentlichen werden phosphorhaltige Verbindungen eingesetzt, deren Palette sehr groß ist, da sie sich über mehrere Oxidationsstufen des Phosphors erstrecken, wie Phosphine, Phosphinoxide, Phosphoniumverbindungen, Phosphate, elementarer roter Phosphor, Phosphite und Phosphate. Als Phosphorsäureverbindungen können beispielhaft erwähnt werden: Monoammoniumphosphat, Diammoniumphosphat, Ammoniumphosphat, Ammoniumpolyphosphat, Melaminphosphat, Melaminharzphosphate, Kaliumphosphat, Polyolphosphate wie etwa Pentaerythritphosphat, Glyzerinphosphat, Sorbitphosphat, Mannitphosphat, Dulcitphosphat, Neopentylglykolphosphat, Ethylenglykolphosphat, Dipentaerythritphosphat und dergleichen. Bevorzugt wird als Phosphorsäureverbindung ein Polyphosphat oder ein Ammoniumpolyphosphat eingesetzt. Unter Melaminharzphosphaten sind dabei Verbindungen wie Umsetzungsprodukte aus Lamelite C (Melamin-FormaldehydHarz) mit Phosphorsäure zu verstehen. Als Schwefelsäureverbindungen können beispielhaft erwähnt werden: Ammoniumsulfat, Ammoniumsulfamat, Nitroanilinbisulfat, 4-Nitroanilin-2-sulfonsäure und 4,4-Dinitrosulfanilamid und dergleichen. Als Borsäureverbindung kann Melaminborat beispielhaft erwähnt werden.

Als Treibmittel kommen die üblicherweise in Brandschutzformulierungen verwendeten und dem Fachmann bekannten Verbindungen in Betracht, wie Cyanursäure oder Isocyansäure und deren Derivate, Melamin und deren Derivate. Solche sind Cyanamid, Dicyanamid, Dicyandiamid, Guanidin und dessen Salze, Biguanid, Melamincyanurat, Cyansäuresalze, Cyansäureester und -amide, Hexamethoxymethylmelamin, Dimelaminpyrophosphat, Melaminpolyphosphat, Melaminphosphat. Bevorzugt wird Hexamethoxymethylmelamin oder Melamin (Cyanursäureamid) eingesetzt.

Geeignet sind ferner Komponenten, die ihre Wirkungsweise nicht auf eine einzige Funktion beschränkt, wie Melaminpolyphosphat, das sowohl als Säurebildner als auch als Treibmittel wirkt. Weitere Beispiele sind in der GB 2 007 689 A1, EP 139 401 A1 und US-3 969 291 A1 beschrieben.

In einer Ausführungsform der Erfindung, in der die isolierende Schicht durch physikalische Intumeszenz gebildet wird, umfasst das dämmschichtbildende Additiv mindestens eine thermisch expandierbare Verbindung, wie eine Graphit-Interkallationsverbindung, die auch als Blähgraphit bekannt sind. Diese können ebenfalls ins Bindemitteleingebunden werden.

Als Blähgraphit kommen beispielsweise bekannte Einlagerungsverbindungen von $SO_x$, $NO_x$, Halogen und/oder starken Säuren in Graphit in Frage. Diese werden auch als Graphitsalze bezeichnet. Bevorzugt sind Blähgraphite, die bei Temperaturen von beispielsweise 120 bis 350°C unter Aufblähen $SO_2$, $SO_3$, NO und/oder $NO_2$ abgeben. Der Blähgraphit kann beispielsweise in Form von Plättchen mit einem maximalen Durchmesser im Bereich von 0,1 bis 5 mm vorliegen. Vorzugsweise liegt dieser Durchmesser im Bereich 0,5 bis 3 mm. Für die vorliegende Erfindung geeignete Blähgraphite sind im Handel erhältlich. Im Allgemeinen sind die Blähgraphitteilchen in den erfindungsgemäßen Brandschutzelementen gleichmäßig verteilt. Die Konzentration an Blähgraphitteilchen kann aber auch punktuell, musterartig, flächig und/oder sandwichartig variiert sein. In dieser Hinsicht wird Bezug genommen auf die EP 1489136 A1. Da die im Brandfall gebildete Aschekruste in der Regel zu instabil ist und abhängig von deren Dichte und Struktur etwa durch Luftströmungen verblasen werden kann, was sich negativ auf die isolierende Wirkung der Beschichtung auswirkt, wird zu den eben aufgeführten Komponenten bevorzugt mindestens ein Aschekrustenstabilisator gegeben. Als Aschekrustenstabilisatoren bzw. Gerüstbildner kommen die üblicherweise in Brandschutzformulierungen verwendeten und dem Fachmann bekannten Verbindungen in Betracht, beispielsweise Blähgraphit und teilchenförmige Metalle, wie Aluminium, Magnesium, Eisen und Zink. Das teilchenförmige Metall kann in Form eines Pulvers, von Plättchen, Schuppen, Fasern, Fäden und/oder Whiskers vorliegen, wobei das teilchenförmige Metall in Form von Pulver, Plättchen oder Schuppen eine Teilchengrösse von $\leq 50\ \mu m$, vorzugsweise von 0,5 bis 10 $\mu m$ besitzt. Im Fall der Verwendung des teilchenförmigen Metalls in Form von Fasern, Fäden und/oder Whiskers ist eine Dicke von 0,5 bis 10 $\mu m$ und eine Länge von 10 bis 50 $\mu m$ bevorzugt. Als Aschekrustenstabilisator kann alternativ oder zusätzlich ein Oxid oder eine Verbindung eines Metalls aus der Aluminium, Magnesium, Eisen oder Zink umfassenden Gruppe eingesetzt werden, insbesondere Eisenoxid, vorzugsweise Eisentrioxid, Titandioxid, ein Borat, wie Zinkborat und/oder eine Glasfritte aus niedrig schmelzenden Gläsern mit einer Schmelztemperatur von vorzugsweise bei oder oberhalb 400°C, Phosphat- oder Sulfatgläsern, Melaminpolyzinksulfaten, Ferrogläsern oder Calziumborosilikaten. Die Zugabe eines solchen Aschekrustenstabilisators trägt zu einer wesentlichen Stabilisierung der Aschekruste im Brandfall bei, da diese Additive die mechanische Festigkeit der intumeszierenden Schicht erhöhen und/oder deren Abtropfen verhindern. Beispiele derartiger Additive finden sich auch in US 4 442 157 A, US 3 562 197 A, GB 755 551 A sowie EP 138 546 A1.

Daneben können Aschekrustenstabilisatoren wie Melaminphosphat oder Melaminborat enthalten sein.

Optional können der erfindungsgemäßen Zusammensetzung ein oder mehrere reaktive Flammhemmer zugesetzt werden. Derartige Verbindungen werden in das Bindemittel eingebaut. Ein Beispiel im Sinne der Erfindung sind reaktive Organophosphorverbindungen, wie 9,10-Dihydro-9-oxa-10-phosphaphenanthren-10-oxid (DOPO) und dessen Derivate, wie beispielsweise DOPO-HQ, DOPO-NQ, und Addukte. Solche Verbindungen sind beispielsweise beschrieben in S. V Levchik, E. D Weil, Polym. Int 2004, 53,1901-1929.

Die Zusammensetzung kann neben den dämmschichtbildenden Additiven gegebenenfalls übliche Hilfsmittel, wie Lösungsmittel, etwa Xylol oder Toluol, Netzmittel, etwa auf Basis von Polyacrylaten und/oder Polyphosphaten, Entschäumer, wie Silikonentschäumer, Verdicker, wie Alginatverdicker, Farbstoffe, Fungizide, Weichmacher, wie chlorhaltige Wachse, Bindemittel, Flammhemmer oder diverse Füllstoffe, wie Vermiculit, anorganische Fasern, Quarzsand, Mikroglaskugeln, Glimmer, Siliziumdioxid, Mineralwolle, und dergleichen enthalten.

Zusätzliche Additive wie Verdicker, Rheologieadditive und Füllstoffe können der Zusammensetzung zugegeben werden. Als Rheologieadditive, wie Anti-Absetzmittel, Antiablaufmittel und Thixotropiermittel, werden vorzugsweise Polyhydroxycarbonsäureamide, Harnstoffderivate, Salze ungesättigter Carbonsäureester, Alkylammoniumsalze saurer

Phosphorsäurederivate, Ketoxime, Aminsalze der *p*-Toluolsulfonsäure, Aminsalze von Sulfonsäurederivaten sowie wässrige oder organische Lösungen oder Mischungen der Verbindungen verwendet werden verwendet. Daneben können Rheologieadditive auf Basis pyrogener oder gefällter Kieselsäuren oder auf Basis silanisierter pyrogener oder gefällter Kieselsäuren eingesetzt werden. Bevorzugt handelt es sich bei dem Rheologieadditiv um pyrogene Kieselsäuren, modifizierte und nicht modifizierte Schichtsilikate, Fällungskieselsäuren, Celluloseether, Polysaccharide, PU- und Acrylatverdicker, Harnstoffderivate, Rizinusölderivate, Polyamide und Fettsäureamide und Polyolefine, soweit sie in fester Form vorliegen, pulverisierte Cellulosen und/oder Suspensionsmittel wie z.B. Xanthan-Gummi.

Die erfindungsgemäße Zusammensetzung kann als Zwei- oder mehrkomponenten-System konfektioniert werden.

Falls eine Reaktion des Bestandteils A mit dem Bestandteil B bei Raumtemperatur eintritt, müssen der Bestandteil A und der Bestandteil B reaktionsinhibierend getrennt angeordnet werden. In Anwesenheit eines Katalysators muss dieser entweder getrennt von den Bestandteilen A und B gelagert werden, oder der Bestandteil, der den Katalysator enthält, muss getrennt von dem anderen Bestandteil gelagert werden. Hierdurch wird erreicht, dass die beiden Komponenten A und B des Bindemittels erst unmittelbar vor der Anwendung miteinander gemischt werden und die Härtungsreaktion auslösen. Dies macht das System einfacher in der Handhabung.

In einer bevorzugten Ausführungsform der Erfindung ist die erfindungsgemäße Zusammensetzung als Zweikomponenten-System konfektioniert, wobei der Bestandteil A und der Bestandteil B reaktionsinhibierend getrennt angeordnet sind. Dementsprechend enthält eine erste Komponente, die Komponente I, den Bestandteil A und eine zweite Komponente, die Komponente II, den Bestandteil B. Hierdurch wird erreicht, dass die beiden Bestandteile A und B des Bindemittels erst unmittelbar vor der Anwendung miteinander gemischt werden und die Härtungsreaktion auslösen. Dies macht das System einfacher in der Handhabung.

Das mindestens eine Epoxidharz ist dabei bevorzugt in einer in einer Menge von 15 bis 95 Gew.-% in der Komponente I enthalten.

Wird ein Reaktiwerdünner verwendet, so ist dieser in einer Menge von 90 bis 2 Gew.-%, bevorzugt 70 bis 3 Gew.-%, weiter bevorzugt 50 bis 4 Gew.-% und stärker bevorzugt 40 bis 5 Gew.-% in der Komponente I enthalten.

Die Thioverbindung, insbesondere Thiol-funktionalisierte Verbindung ist bevorzugt in einer Menge von 0,5 bis 90 Gew.-%, besonders bevorzugt in einer Menge von 2 bis 85 Gew.-% in der Komponente II enthalten.

Der Bestandteil C kann dabei als Gesamtmischung oder in Einzelkomponenten aufgeteilt in einer ersten Komponente I und/oder einer zweiten Komponente II enthalten sein. Die Aufteilung des Bestandteils C erfolgt abhängig von der Verträglichkeit der in der Zusammensetzung enthaltenen Verbindungen, so dass weder eine Reaktion der in der Zusammensetzung enthaltenen Verbindungen untereinander bzw. eine gegenseitige Störung noch eine Reaktion dieser Verbindungen mit den Verbindungen der anderen Bestandteile erfolgen kann. Dies ist von den verwendeten Verbindungen abhängig. Hierdurch wird sichergestellt, dass ein möglichst hoher Anteil an Füllstoffen erzielt werden kann. Dies führt zu einer hohen Intumeszenz, selbst bei geringen Schichtdicken der Zusammensetzung.

Das dämmschichtbildende Additiv kann in einer Menge von 30 bis 99 Gew.-% in der Zusammensetzung enthalten sein, wobei die Menge im Wesentlichen von der Applikationsform der Zusammensetzung (Sprühen, Pinseln und dergleichen) abhängt. Um eine möglichst hohe Intumeszenzrate zu bewirken, wird der Anteil des Bestandteils C in der Gesamtformulierung so hoch wie möglich eingestellt. Bevorzugt beträgt der Anteil des Bestandteils C in der Gesamtformulierung 35 bis 85 Gew.-% und besonders bevorzugt 40 bis 85 Gew.-%.

Die Zusammensetzung wird als Paste mit einem Pinsel, einer Rolle oder durch Sprühen auf das Substrat, insbesondere metallische Substrat aufgebracht. Bevorzugt wird die Zusammensetzung mittels eines Airless-Sprühverfahrens aufgebracht.

Die erfindungsgemäße Zusammensetzung zeichnet sich, verglichen mit den lösemittel- und wasserbasierten Systemen, durch eine relativ schnelle Aushärtung durch eine Additionsreaktion und damit nicht notwendige Trocknung aus. Dies ist insbesondere dann sehr wichtig, wenn die beschichteten Bauteile schnell belastet bzw. weiterverarbeitet werden müssen, sei es durch Beschichtung mit einer Deckschicht oder ein Bewegen oder Transportieren der Bauteile. Auch ist die Beschichtung somit deutlich weniger anfällig gegenüber äußeren Einflüssen auf der Baustelle, wie z.B. Beaufschlagung mit (Regen)-wasser oder Staub und Schmutz, welche in lösemittel- oder wasserbasierten Systemen zu einem Auswaschen von wasserlöslichen Bestandteilen wie dem Ammoniumpolyphosphat führen kann, bzw. bei der Aufnahme von Staub zu einer reduzierten Intumeszenz. Durch die geringe Viskosität der Zusammensetzung trotz des hohen Feststoffanteils bleibt die Zusammensetzung einfach zu verarbeiten, insbesondere durch gängige Sprühverfahren.

Aufgrund des niedrigen Erweichungspunktes des Bindemittels und des hohen Feststoffanteils, ist selbst bei geringer Schichtdicke die Expansionsrate bei Hitzeeinwirkung hoch.

Deshalb ist die erfindungsgemäße zwei- oder mehrkomponentige Zusammensetzung als Beschichtung, insbesondere als Brandschutzbeschichtung, bevorzugt sprühbare Beschichtung für Substrate auf metallischer und nicht metallischer Basis geeignet. Die Substrate sind nicht beschränkt und umfassen Bauteile, insbesondere Stahlbauteile und Holzbauteile, aber auch einzelne Kabel, Kabelbündel, Kabeltrassen und Kabelkanäle oder andere Leitungen.

Die erfindungsgemäße Zusammensetzung findet vor allem im Baubereich als Beschichtung, insbesondere Brandschutzbeschichtung für Stahlkonstruktionselemente, aber auch für Konstruktionselemente aus anderen Materialien, wie Beton oder Holz, sowie als Brandschutzbeschichtung für einzelne Kabel, Kabelbündel, Kabeltrassen und Kabelkanäle oder andere Leitungen Verwendung.

Ein weiterer Gegenstand der Erfindung ist daher die Verwendung der erfindungsgemäßen Zusammensetzung als Beschichtung, insbesondere als Beschichtung für Konstruktionselemente oder Bauelemente aus Stahl, Beton, Holz und anderen Materialien, wie etwa Kunststoffen, insbesondere als Brandschutzbeschichtung.

Die vorliegende Erfindung betrifft auch Objekte, die erhalten werden, wenn die erfindungsgemäße Zusammensetzung ausgehärtet ist. Die Objekte haben ausgezeichnete dämmschichtbildende Eigenschaften.

Die folgenden Beispiele dienen der weiteren Erläuterung der Erfindung.

**AUSFÜHRUNGSBEISPIELE**

Für die Herstellung von erfindungsgemäßen dämmschichtbildenden Zusammensetzungen werden wie nachfolgend angegeben die Einzelkomponenten mit Hilfe eines Dissolvers vermengt und homogenisiert

Es wurden jeweils das Aushärteverhalten beobachtet, anschließend der Intumeszenzfaktor und die relative Aschekrustenstabilität bestimmt. Hierzu wurde die Massen jeweils in eine runde Teflon-Form mit etwa 2 mm Tiefe und 48 mm Durchmesser gegeben.

Die Zeit für die Aushärtung entspricht dabei der Zeit, nach der die Proben durchgehärtet waren und der Teflon-Form entnommen werden konnten.

Zur Bestimmung des Intumeszenzfaktors und der relativen Aschekrustenstabilität wurde ein Muffelofen auf 600°C vorgeheizt. Es wurde eine Mehrfachmessung der Probendicke mit der Schieblehre durchgeführt und der Mittelwert $h_M$ berechnet. Dann wurden die Proben jeweils in eine zylindrische Stahlform eingebracht und für 30 min im Muffelofen erhitzt. Nach Abkühlen auf Raumtemperatur wurde die Schaumhöhe $h_{E1}$ zunächst zerstörungsfrei bestimmt (Mittelwert einer Mehrfachmessung). Der Intumeszenzfaktor *I* berechnet sich wie folgt:

Intumeszenzfaktor I:

$$I = h_{E1} : h_M$$

Anschließend ließ man in der zylindrischen Stahlform ein definiertes Gewicht (m = 105 g) aus einer definierten Höhe (h = 100 mm) auf den Schaum fallen und bestimmte die nach dieser teilweise zerstörenden Einwirkung verbleibende Schaumhöhe $h_{E2}$. Die relative Aschekrustenstabilität wurde wie folgt berechnet:

relative Aschekrustenstabilität (AKS):

$$AKS = h_{E2} : h_{E1}$$

Ferner wurde der Schrumpf während der "Trocknung", d.h. Reaktion der beiden Komponenten, gemessen.

Hierzu wurde eine Form mit einer Dicke von 10 mm mit den jeweiligen Mischungen gefüllt. Nach dem Aushärten wurde der gebildete Formkörper aus der Form genommen und die Dicke gemessen. Aus der Differenz ergibt sich dann der Schrumpf.

Bei den folgenden Beispielen 1 bis 5 wurde als Bestandteil C folgende Zusammensetzung verwendet:

*Bestandteil C*:

| **Bestandteil** | **Menge [g]** |
|---|---|
| Pentaerythrit | 8,7 |
| Melamin | 8,7 |
| Ammoniumpolyphosphat | 16,6 |
| Titandioxid | 7,9 |

**Beispiel 1**

*Bestandteil A*

| **Bestandteil** | **Menge [g]** |
|---|---|
| Epilox AF 18-30 [1] | 10,6 |
| [1] Epoxidharz auf Bisphenol A/F Basis | |

*Bestandteil B*

| **Bestandteil** | **Menge [g]** |
|---|---|
| Capcure® 3-800 [2] | 16,7 |
| Ancamine K54 [3] | 0,7 |
| [2] trifunktionellles aliphatisches Thiol<br>[3] Pentaerythritoltetra(3-mercaptopropionat) | |

*Bestandteil C*

| **Bestandteil** | **Menge [g]** |
|---|---|
| wie oben angegeben | 42,1 |

Zur Herstellung eines zweikomponentigen Systems wurde der Bestandteil C so auf die Bestandteile A und B aufgeteilt, dass das Pentaerythrit zusammen mit dem Ammoniumpolyphosphat zu Komponente I und das Melamin zusammen mit dem Titandioxid zu Komponente II gemischt werden.

**Beispiel 2**

*Bestandteil A*

| **Bestandteil** | **Menge [g]** |
|---|---|
| Epilox AF 18-30 | 13,6 |
| Heloxy Modifier HD [4] | 2,3 |
| [4] Hexandioldiglycidylether | |

*Bestandteil B*

| **Bestandteil** | **Menge [g]** |
|---|---|
| Thiocure ® PETMP [5] | 12,1 |
| Ancamine K54 | 0,1 |
| [5] Pentaerythritoltetra(3-mercaptopropionat) | |

*Bestandteil C*

| Bestandteil | Menge [g] |
|---|---|
| wie oben angegeben | 42,1 |

Zur Herstellung eines zweikomponentigen Systems wurden bis auf den Katalysator alle Bestandteile A, B und C miteinander zu einer ersten Komponente I vermischt, so dass der Katalysator als zweite Komponente II konfektioniert wurde.

**Beispiel 3**

*Bestandteil A*

| Bestandteil | Menge [g] |
|---|---|
| Epilox AF 18-30 | 13,1 |
| Heloxy Modifier HD | 2,2 |

*Bestandteil B*

| Bestandteil | Menge [g] |
|---|---|
| Thiocure ® TMPMP [6] | 12,7 |
| Ancamine K54 | 0,1 |
| [6] Trimethylolpropantris(3-mercaptopropionat) | |

*Bestandteil C*

| Bestandteil | Menge [g] |
|---|---|
| wie oben angegeben | 42,1 |

Zur Herstellung eines zweikomponentigen Systems wurden bis auf den Katalysator alle Bestandteile A, B und C miteinander zu einer ersten Komponente I vermischt, so dass der Katalysator als zweite Komponente II konfektioniert wurde.

**Beispiel 4**

*Bestandteil A*

| Bestandteil | Menge [g] |
|---|---|
| Epilox AF 18-30 | 13,7 |
| Heloxy Modifier HD | 2,3 |

*Bestandteil B*

| Bestandteil | Menge [g] |
|---|---|
| Thiocure ® TMPMA [7] | 11,9 |

(fortgesetzt)

| Bestandteil | Menge [g] |
|---|---|
| Ancamine K54 | 0,1 |
| [7] Trimethylylpentantetramercaptoacetat | |

*Bestandteil C*

| Bestandteil | Menge [g] |
|---|---|
| wie oben angegeben | 42,1 |

Zur Herstellung eines zweikomponentigen Systems wurden bis auf den Katalysator alle Bestandteile A, B und C miteinander zu einer ersten Komponente I vermischt, so dass der Katalysator als zweite Komponente II konfektioniert wurde.

**Beispiel 5**

*Komponente A*

| Bestandteil | Menge [g] |
|---|---|
| Epilox AF 18-30 | 12,9 |
| Heloxy Modifier HD | 2,2 |

*Komponente B*

| Bestandteil | Menge [g] |
|---|---|
| KarenzMT PE 1 [8] | 12,8 |
| Ancamine K54 | 0,2 |
| [8] Gemisch aus 77-94 % Pentaerythritoltetrakls(3-mercaptobutylat) und 3-20 % Pentaerythritoltris(3-mereaptobutanoat) (Showa Denko) | |

*Komponente C*

| Bestandteil | Menge [g] |
|---|---|
| wie oben angegeben | 42,1 |

Zur Herstellung eines zweikomponentigen Systems wurden bis auf den Katalysator alle Bestandteile A, B und C miteinander zu einer ersten Komponente I vermischt, so dass der Katalysator als zweite Komponente II konfektioniert wurde.

**Vergleichsbeispiel 1**

Als Vergleich diente ein auf wässriger Dispersionstechnologie basiertes kommerzielles Brandschutzprodukt (Hilti CFP S-WB).

**Vergleichsbeispiel 2**

Als weiter Vergleich diente ein Standard-Epoxy-Amin-System (Jeffamin T-403, flüssiges, lösemittelfreies und kristallisationsstabiles Epoxidharz, bestehend aus niedermolekularen Epoxidharzen auf Basis Bisphenol A und Bisphenol

F (Epilox AF 18-30, Leuna-Harze GmbH) und 1,6-Hexandioldiglycidylether), das zu 60 % mit einem Intumeszenzgemisch analog den obigen Beispielen gefüllt ist, getestet.

**Vergleichsbeispiel 3**

Als weiter Vergleich diente ein Standard-Epoxy-Amin-System (Isophorondiamin, Trimethylolpropantriacrylat und flüssiges, lösemittelfreies und kristallisationsstabiles Epoxidharz, bestehend aus niedermolekularen Epoxidharzen auf Basis Bisphenol A und Bisphenol F (Epilox AF 18-30, Leuna-Harze GmbH)), das zu 60 % mit einem Intumeszenzgemisch analog den obigen Beispielen gefüllt ist, getestet.

Tabelle 1: Ergebnisse der Messungen des Intumeszenzfaktors, der Aschenkrustenstabilität und der Aushärtezeit

| **Beispiel** | **Intumeszenzfaktor I (Vielfaches)** | **relative Aschenkrustenstabilität AKS (Vielfaches)** | **Probendicke $h_M$ (mm)** | **Aushärtezeit (min)** |
|---|---|---|---|---|
| 1 | 38 | 0,86 | 5,8 | 10 Minuten |
| 2 | 24 | 0,42 | 1,2 | 150 Minuten |
| 3 | 21 | 0,43 | 1,4 | 150 Minuten |
| 4 | 31 | 0,19 | 1,4 | 120 Minuten |
| 5 | 14 | 0,71 | 2,8 | 50 Minuten |
| Vergleichsbeispiel 1 | 36 | 0,62 | 1,8 | 10 Tage |
| Vergleichsbeispiel 2 | 22 | 0,04 | 1,6 | 12 Stunden |
| Vergleichsbeispiel 3 | 1,7 | 0,6 | 1,2 | 1 Tag |

**Patentansprüche**

1. Dämmschichtbildende Zusammensetzung mit einem Bestandteil A, der mindestens ein Epoxidharz enthält, mit einem Bestandteil B, der mindestens eine Thioverbindung als Härtungsmittel enthält, und mit einem Bestandteil C, der ein dämmschichtbildendes Additiv enthält, wobei die Zusammensetzung ferner ein Phenol-Derivat oder ein tertiäres Amin als Katalysator für die Reaktion des Epoxidharzes mit der Thioverbindung enthält.

2. Dämmschichtbildende Zusammensetzung nach Anspruch 1, wobei die Thioverbindung eine Thiol-funktionalisierte Verbindung ist.

3. Dämmschichtbildende Zusammensetzung nach Anspruch 1 oder 2, wobei das mindestens eine Epoxidharz und die mindestens eine Thioverbindung multifunktionell sind.

4. Zusammensetzung nach einem der vorhergehenden Ansprüche, wobei das mindestens eine multifunktionelle Epoxidharz durch die Reaktion von Polyhydroxyverbindungen mit Epihalogenhydrinen oder deren Vorläufern erhältlich ist und eine Epoxidäquivalentmasse (EEW) $\leq$ 550 g/Val aufweist.

5. Zusammensetzung nach Anspruch 4, wobei die Polyhydroxyverbindung unter mehrwertigen Phenolen ausgewählt ist.

6. Zusammensetzung nach Anspruch 5, wobei die Polyhydroxyverbindung Bisphenol A oder Bisphenol F oder ein Gemisch davon ist.

7. Zusammensetzung nach einem der Ansprüche 2 bis 6, wobei die eine oder mehreren Thiolgruppe(n) der mindestens einen Thiol-funktionalisierten Verbindung an ein Monomer, ein Oligomer oder ein Polymer als Gerüst gebunden sind.

8. Zusammensetzung nach einem der Ansprüche 2 bis 7, wobei die Thiol-funktionalisierte Verbindung aus der Gruppe

ausgewählt ist, bestehend aus Glykol-bis(2-mercaptoacetat), Glykol-bis(3-mercaptopropionat), 1,2-Propylenglykol-bis(2-mercaptoacetat), 1,2-Propylenglykol-bis(3-mercaptopropionat), 1,3-Propylenglykol-bis(2-mercaptoacetat), 1,3-Propylenglykol-bis(3-mercaptopropionat), Tris(hydroxymethyl)methan-tris(2-mercaptoacetat), Tris(hydroxymethyl)methan-tris(3-mercaptopropionat), 1,1,1-Tris(hydroxymethyl)ethan-tris(2-mercaptoacetat), 1,1,1-Tris(hydroxymethyl)ethan-tris(3-mercaptopropionat), 1,1,1-Trimethylolpropan-tris(2-mercaptoacetat), ethoxyliertes 1,1,1-Trimethylolpropan-tris(2-mercaptoacetat), propoxyliertes 1,1,1-Trimethylolpropan-tris(2-mercaptoacetat), 1,1,1-Trimethylolpropan-tris(3-mercaptopropionat), ethoxyliertes 1,1,1-Trimethylolpropan-tris(3-mercaptopropionat), propoxyliertes Trimethylolpropan-tris(3-mercaptopropionat), 1,1,1 -Trimethylolpropan-tris(3-mercaptobutyrat), Pentaerythritol-tris(2-mercaptoacetat), Pentaerythritol-tetrakis(2-mercaptoacetat), Pentaerythritol-tris(3-mercaptopropionat), Pentaerythritol-tetrakis(3-mercaptopropionat), Pentaerythritol-tris(3-mercaptobutyrat), Pentaerythritol-tetrakis(3-mercaptobutyrat), Capcure 3-800 (BASF), GPM-800 (Gabriel Performance Products), Capcure LOF (BASF), GPM-800LO (Gabriel Performance Products), KarenzMT PE-1 (Showa Denko), 2-Ethylhexylthioglykolat, *iso*-Octylthioglykolat, Di(*n*-butyl)thiodiglykolat, Glykol-di-3-mercaptopropionat, 1,6-Hexandithiol, Ethylenglykol-bis(2-mercaptoacetat) und Tetra(ethylenglykol)dithiol.

**9.** Zusammensetzung nach einem der vorhergehenden Ansprüche, wobei der Bestandteil B ferner mindestens ein Amin als Co-Härtungsmittel enthält.

**10.** Zusammensetzung nach Anspruch 9, wobei das mindestens eine Amin unter primären und/oder sekundären aliphatischen Aminen und/oder Polyaminen ausgewählt ist.

**11.** Zusammensetzung nach einem der vorhergehenden Ansprüche, wobei das reaktive Äquivalentverhältnis im Bereich von 0,1:1 bis 10:1 liegt.

**12.** Zusammensetzung nach einem der vorhergehenden Ansprüche, wobei das dämmschichtbildende Additiv ein Gemisch, das gegebenenfalls mindestens einen Kohlenstofflieferant, mindestens einen Säurebildner und mindestens ein Treibmittel umfasst, und/oder mindestens eine thermisch expandierbare Verbindung umfasst.

**13.** Zusammensetzung nach Anspruch 12, wobei das dämmschichtbildende Additiv ferner mindestens einen Aschekrustenstabilisator enthält.

**14.** Zusammensetzung nach einem der vorhergehenden Ansprüche, wobei die Zusammensetzung ferner organische und/oder anorganische Zuschlagstoffe und/oder weitere Additive enthält.

**15.** Zusammensetzung nach einem der vorhergehenden Ansprüche, die als Zwei- oder Mehrkomponenten-System konfektioniert ist.

**16.** Zusammensetzung nach Anspruch 15, wobei die Zusammensetzung als Zweikomponenten-System konfektioniert ist und der Bestandteil A und der Bestandteil B reaktionsinhibierend auf die zwei Komponenten, Komponente I und Komponente II, aufgeteilt sind.

**17.** Zusammensetzung nach Anspruch 16, wobei der Bestandteil A in der ersten Komponente I und der Bestandteil B in der zweiten Komponente II enthalten ist.

**18.** Zusammensetzung nach Anspruch 17, wobei das mindestens eine Epoxidharz in einer Menge von 15 bis 95 Gew.-% in der Komponente I enthalten ist.

**19.** Zusammensetzung nach Anspruch 17 oder 18, wobei die mindestens eine Thioverbindung in einer Menge von 0,5 bis 90 Gew.-% in der Komponente II enthalten ist.

**20.** Zusammensetzung nach einem der Ansprüche 16 bis 19, wobei der Bestandteil C, der gegebenenfalls mindestens einen Kohlenstofflieferant, mindestens ein Treibmittel und mindestens einen Säurebildner umfasst, derart auf die Komponente I und die Komponente II aufgeteilt ist, dass diese Verbindungen reaktionsinhibierend getrennt voneinander sind.

**21.** Zusammensetzung nach Anspruch 20, wobei der Bestandteil C ferner einen Aschekrustenstabilisator enthält, der derart auf die Komponente I und die Komponente II aufgeteilt ist, dass die Komponente I oder die Komponente II zumindest einen Teil des Aschekrustenstabilisators enthält und die Komponente II oder die Komponente I gegebenenfalls einen weiteren Teil des Aschekrustenstabilisators enthält.

**22.** Verwendung der Zusammensetzung nach einem der Ansprüche 1 bis 21 als Beschichtung.

**23.** Verwendung nach Anspruch 22 für die Beschichtung von Stahlkonstruktionselementen.

**24.** Verwendung nach Anspruch 22 für die Beschichtung von metallisch und/oder nicht metallischen Substraten.

**25.** Verwendung nach einem der Ansprüche 22 bis 24 als Brandschutzschicht.

**26.** Gehärtete Objekte, erhalten durch Härten der Zusammensetzung nach einem der Ansprüche 1 bis 21.

## Claims

**1.** Insulating layer-forming composition with a part A, which contains at least one epoxy resin, a part B, which contains at least one thio-compound as a hardening agent, and a part C, which contains an insulating layer-forming additive, in which the composition also contains a phenol derivative or a tertiary amine as a catalyst for the reaction of the epoxy resin with the thio-compound.

**2.** Insulating-layer forming composition according to claim 1, in which the thio-compound is a thiol functionalised compound.

**3.** Insulating layer-forming composition according to claim 1 or 2, in which the at least one epoxy resin and the at least one thio-compound are multifunctional.

**4.** Composition according to one of the previous claims, in which the at least one multifunctional epoxy resin may be obtained through the reaction of polyhydroxy compounds with epihalogenhydrins or their precursors and has an epoxy equivalent weight (EEW) < 550 g/Val.

**5.** Composition according to claim 4, in which the polyhydroxy compound is selected from polyvalent phenols.

**6.** Composition according to claim 5, in which the polyhydroxy compound is bisphenol A or bisphenol F or a mixture of these.

**7.** Composition according to one of claims 2 to 6, in which the one or several thiol group(s) of the at least one thiol functionalised compound is/are bonded to a monomer, an oligomer or a polymer as a framework.

**8.** Composition according to one of claims 2 to 7, in which the thiol functionalised compound is selected from the group consisting of glycol-bis(2-mercaptoacetate), glycol-bis(3-mercaptopropionate), 1,2-propylene glycol-bis(2-mercaptoacetate), 1,2-propylene glycol-bis(3-mercaptopropionate), 1,3-propylene glycol-bis(2-mercaptoacetate), 1,3-propylene glycol-bis(3-mercaptopropionate), tris(hydroxymethyl) methane tris(2-mercaptoacetate), tris(hydroxymethyl) methane tris(3-mercaptopropionate), 1,1,1-tris(hydroxymethyl) ethane tris(2-mercaptoacetate), 1,1,1 -tris(hydroxymethyl) ethane tris(3-mercaptopropionate), 1,1,1-trimethylolpropane tris(2-mercaptoacetate), ethoxylated 1,1,1-trimethylolpropane tris(2-mercaptoacetate), propoxylated 1,1,1-trimethylolpropane tris(2-mercaptoacetate), 1,1,1-trimethylolpropane tris(3-mercaptopropionate), ethoxylated 1,1,1-trimethylolpropane tris(3-mercaptopropionate), propoxylated trimethylolpropane tris(3-mercaptopropionate), 1,1,1 -trimethylolpropane tris(3-mercaptobutyrate), pentaerythritol tris(2-mercaptoacetate), pentaerythritol tetrakis(2-mercaptoacetate), pentaerythritol tris(3-mercaptopropionate), pentaerythritol tetrakis(3-mercaptopropionate), pentaerythritol tris(3-mercaptobutyrate), pentaerythritol tetrakis(3-mercaptobutyrate), Capcure 3-800 (BASF), GPM-800 (Gabriel Performance Products), Capcure LOF (BASF), GPM-800LO (Gabriel Performance Products), KarenzMT PE-1 (Showa Denko), 2-ethylhexyl thioglycolate, isooctyl thioglycolate, di(n-butyl)thiodiglycolate, glycol-di-3-mercaptopropionate, 1,6-hexane dithiol, ethylene glycol-bis(2-mercaptoacetate) and tetra(ethylene glycol) dithiol.

**9.** Composition according to one of the previous claims, in which part B further contains at least one amine as a co-hardening agent.

**10.** Composition according to claim 9, in which the at least one amine is selected from primary and/or secondary aliphatic

amines and/or polyamines.

**11.** Composition according to one of the previous claims, in which the reactive equivalent ratio is in the range from 0.1:1 to 10:1.

**12.** Composition according to one of the previous claims, in which the insulating layer-forming additive is a mixture, which optionally comprises at least one carbon supplier, at least one acid producer and at least one blowing agent and/or at least one compound that is thermally expandable.

**13.** Composition according to claim 12, in which the insulating layer-forming additive further contains at least one ash crust stabiliser.

**14.** Composition according to one of the previous claims, in which the composition further contains organic and/or anorganic aggregates and/or further additives.

**15.** Composition according to one of the previous claims, which is made as a two- or multi-component system.

**16.** Composition according to claim 15, in which the composition is made as a two-component system and part A and part B are divided over the two components, component I and component I in a way that inhibits reaction.

**17.** Composition according to claim 16, in which part A is contained in the first component I and part B in the second component II.

**18.** Composition according to claim 17, in which the at least one epoxy resin is contained in component I in a quantity of 15 to 95% by weight.

**19.** Composition according to claim 17 or 18, in which the at least one thio-compound is contained in component II in a quantity of 0.5 to 90% by weight.

**20.** Composition according to one of claims 16 to 19, in which part C, which optionally comprises at least one carbon supplier, at least one blowing agent and at least one acid producer, is divided over component I and component II in such a way that these compounds are separated from each other in a way that inhibits reaction.

**21.** Composition according to claim 20, in which part C further contains an ash crust stabiliser, which is divided over component I and component II in such a way that component I or component II contains at least a part of the ash crust stabiliser and component I or component I further contains a further part of the ash crust stabiliser.

**22.** Use of the composition according to one of claims 1 to 21 as a coating.

**23.** Use according to claim 22 for coating steel construction elements.

**24.** Use according to claim 22 for coating metallic and/or non-metallic substrates.

**25.** Use according to one of claims 22 to 24 as a fire-resistant layer.

**26.** Hardened objects obtained by hardening the composition according to one of claims 1 to 21.

## Revendications

**1.** Composition formant une couche isolante, comprenant un Constituant A, qui contient au moins une résine époxyde, un Constituant B, qui contient au moins un composé thio en tant qu'agent de durcissement, et un Constituant C, qui contient un additif formant une couche isolante, la composition contenant en outre un dérivé du phénol ou une amine tertiaire en tant que catalyseur pour la réaction de la résine époxyde avec le composé thio.

**2.** Composition formant une couche isolante selon la revendication 1, dans laquelle le composé thio est un composé fonctionnalisé thiol.

3. Composition formant une couche isolante selon la revendication 1 ou 2, dans laquelle l'au moins une résine époxyde et l'au moins un composé thio sont multifonctionnels.

4. Composition selon l'une des revendications précédentes, dans laquelle l'au moins une résine époxyde multifonctionnelle peut être obtenue par la réaction de composés polyhydroxylés avec des épihalogènhydrines ou des précurseurs de ceux-ci, et présente une masse équivalente d'époxyde (EEW) $\leq$ 550 g/val.

5. Composition selon la revendication 4, dans laquelle le composé polyhydroxylé est choisi parmi les polyphénols.

6. Composition selon la revendication 5, dans laquelle le composé polyhydroxylé est le bisphénol A ou le bisphénol F ou un mélange de ceux-ci.

7. Composition selon l'une des revendications 2 à 6, dans laquelle le ou les groupes thiol de l'au moins un composé fonctionnalisé thiol est lié à un monomère, à un oligomère ou à un polymère en tant que squelette.

8. Composition selon l'une des revendications 2 à 7, dans laquelle le composé fonctionnalisé thiol est choisi dans le groupe consistant en le bis(2-mercaptoacétate) de glycol, le bis(3-mercaptopropionate) de glycol, le bis(2-mercaptoacétate) de 1,2-propylèneglycol, le bis(3-mercaptopropionate) de 1,2-propylèneglycol, le bis(2-mercaptoacétate de 1,3-propylèneglycol, le bis(3-mercaptopropionate) de 1,3-propylèneglycol, le tris(2-mercaptoaétate) de tris(hydroxyméthyl)méthane, le tris(3-mercaptopropionate) de tris(hydroxyméthyl)méthane, le tris(2-mercaptoacétate) de 1,1,1-tris(hydroxyméthyl)éthane, le tris(3-mercaptopropionate) de 1,1,1-tris(hydroxyméthyl)éthane, le tris(2-mercaptoacétate) de 1,1,1-triméthylolpropane, le tris(2-mercaptoacétate) de 1,1,1-triméthylolpropane éthoxylé, le tris(2-mercaptoacétate) de 1,1,1-triméthylolpropane propoxylé, le tris(3-mercaptopropionate) de 1,1,1-triméthylolpropane, le tris(3-mercaptopropionate) de 1,1,1-triméthylolpropane éthoxylé, le tris(3-mercaptopropionate) de triméthylolpropane propoxylé, le tris(3-mercaptobutyrate) de 1,1,1-triméthylolpropane, le tris(2-mercaptoacétate) de pentaérythritol, le tétrakis(2-mercaptoacétate) de pentaérythritol, le tris(3-mercaptopropionate) de pentaérythritol, le tétrakis(3-mercaptopropionate) de pentaérythritol, le tris(3-mercaptobutyrate) de pentaérythritol, le tétrakis(3-mercaptobutyrate) de pentaérythritol, le Capcure 3-800 (BASF), le GPM-800 (Gabriel Performance Products), le Capcure LOF (BASF), le GPM-800LO (Gabriel Performance Products), le KarenzMP PE-1 (Showa Denko), le thioglycolate de 2-éthylhexyle, le thioglycolate d'*iso*-octyle, le thiodiglycolate de di(*n*-butyle), le di-3-mercaptopropionate de glycol, le 1,6-hexanedithiol, le bis(2-mercaptoacétate) d'éthylèneglycol et le tétra(éthylèneglycol)dithiol.

9. Composition selon l'une des revendications précédentes, dans laquelle le Constituant B contient en outre au moins une amine en tant que co-agent de durcissement.

10. Composition selon la revendication 9, dans laquelle l'au moins une amine est choisie parmi les amines et/ou les polyamines aliphatiques primaires et/ou secondaires.

11. Composition selon l'une des revendications précédentes, dans laquelle le rapport entre équivalents réactifs est compris dans la plage de 0,1:1 à 10:1.

12. Composition selon l'une des revendications précédentes, dans laquelle l'additif formant une couche isolante comprend un mélange, qui éventuellement comprend une source de carbone, au moins un générateur d'acide et au moins un gaz propulseur et/ou au moins un composé thermo-expansible.

13. Composition selon la revendication 12, dans laquelle l'additif formant une couche isolante contient en outre au moins un stabilisant de croûte de cendres.

14. Composition selon l'une des revendications précédentes, dans laquelle la composition contient en outre des granulats organiques et/ou inorganiques et/ou des additifs supplémentaires.

15. Composition selon l'une des revendications précédentes, qui est préparée sous forme d'un système bi-ou multicomposants.

16. Composition selon la revendication 15, dans laquelle la composition est préparée sous forme d'un système bicomposant, et le Constituant A et le Constituant B sont, avec effet inhibiteur de réaction, répartis sur les deux composants Composant I et Composant II.

**17.** Composition selon la revendication 16, dans laquelle le Constituant A est contenu dans le premier Composant I et le Constituant B dans le deuxième Composant II.

**18.** Composition selon la revendication 17, dans laquelle l'au moins une résine époxyde est contenue dans le Composant I en une quantité de 15 à 95 % en poids.

**19.** Composition selon la revendication 17 ou 18, dans laquelle l'au moins un composé thio est contenu dans le Composant II en une quantité de 0,5 à 90 % en poids.

**20.** Composition selon l'une des revendications 16 à 19, dans laquelle le Constituant C, qui comprend éventuellement au moins une source de carbone, au moins un gaz propulseur et au moins un générateur d'acide, est réparti sur le Composant I et le Composant II de telle sorte que les composés soient séparés l'un de l'autre avec effet inhibiteur de réaction.

**21.** Composition selon la revendication 20, dans laquelle le Constituant C contient en outre un stabilisant de croûte de cendres, qui est réparti sur le Composant I et le Composant II de telle sorte que le Composant I ou le Composant II contienne au moins une partie du stabilisant de croûte de cendres, et le Composant II ou le Composant I contienne éventuellement une partie supplémentaire du stabilisant de croûte de cendres.

**22.** Utilisation de la composition selon l'une des revendications 1 à 21 en tant que revêtement.

**23.** Utilisation selon la revendication 22, pour le revêtement d'éléments de construction métallique.

**24.** Utilisation selon la revendication 22, pour le revêtement de substrats métalliques et/ou non-métalliques.

**25.** Utilisation selon l'une des revendications 22 à 24 en tant que couche de protection contre l'incendie.

**26.** Objets durcis, obtenus par durcissement de la composition selon l'une des revendications 1 à 21.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente

- DE 4141858 A1
- WO 2012082224 A1
- WO 9951663 A1
- WO 201208224 A1
- GB 2007689 A1
- EP 139401 A1
- US 3969291 A1
- EP 1489136 A1
- US 4442157 A
- US 3562197 A
- GB 755551 A
- EP 138546 A1

### In der Beschreibung aufgeführte Nicht-Patentliteratur

- Encyclopedia of Polymer Sciences and Technology. Wiley-Interscience, 2004, vol. 9
- **S. V LEVCHIK ; E. D WEIL.** *Polym. Int,* 2004, vol. 53, 1901-1929